Europäisches Patentamt

(19) European Patent Office

Office européen des brevets

(11) Numéro de publication: **0 003 198**

**B1**

(12) **FASCICULE DE BREVET EUROPEEN**

(21) Numéro de dépôt: **79400017.4**

(22) Date de dépôt: **09.01.79**

(51) Int. Cl.³: **F 16 H 55/52, F 16 H 9/04**

(54) Mécanisme de transmission à rapport variable

(30) Priorité: **12.01.78 FR 7800782**

(43) Date de publication de la demande:
**25.07.79 Bulletin 79/15**

(45) Mention de la délivrance du brevet:
**21.01.81 Bulletin 81/03**

(84) Etats contractants désignés:
**BE CH DE GB IT LU NL SE**

(56) Documents cités:
**DE - B - 1 024 768**
**FR - A - 978 916**
**FR - A - 1 295 478**
**US - A - 1 997 284**
**US - A - 2 593 510**
**US - A - 3 144 780**

(73) Titulaire: **Guirriec, Louis**
**15 Rue de la Cote St-Rémy**
**F - 95240 Cormeilles en Parisis (FR)**
**FONDERIE DE L'YONNE**
**Route de Nogent**
**F - 89100 Soucy-Sens (FR)**

(72) Inventeur: **Guirriec, Louis**
**15 Rue de la Cote St-Rémy**
**F - 95240 Cormeilles en Parisis (FR)**

(74) Mandataire: **Lavoix, Jean, et al**
**c/o Cabinet Lavoix 2, Place D'Estienne D'Orves**
**F - 75441 Paris Cedex 09 (FR)**

Mécanisme de transmission à rapport variable

La présente invention se rapporte à un mécanisme de transmission à rapport variable de façon continue désigné par le terme "variateur".

On sait que l'utilisation, sur les véhicules automobiles mais également dans le domaine de la machine-outil, d'une transmission dont le rapport varie de façon continue présente un avantage considérable.

En effet, la valeur de ce rapport peut à chaque instant être adaptée aux conditions de fonctionnement du moteur d'entraînement du véhicule ou de la machine en fonction du couple et de la vitesse demandés.

Il existe déjà un nombre important de mécanismes de transmission du type précité qui essaient de satisfaire aux conditions précitées.

Des variateurs connus d'un premier type important comportent des disques coniques convexes solidaires en rotation d'un premier arbre, ces disques étant serrés entre d'autres disques ou anneaux à faces latérales également convexes, solidaires en rotation d'un deuxième arbre parallèle au premier.

Dans ces variateurs, la variation de vitesse est obtenue en modifiant l'écartement entre les arbres.

De tels variateurs présentent les inconvénients suivants:

— la plage de variation du rapport est très restreinte, ce qui oblige à associer aux variateurs un convertisseur de couple, coûteux et entraînant une baisse du rendement global,

— le fait que la distance entre l'arbre menant et l'arbre mené est variable rend complexe la cinématique du variateur,

— le fait que le dispositif d'actionnement de l'arbre mobile doit vaincre l'effort de serrage exercé par les disques ou anneaux portés par l'autre arbre, entraîne l'absorption d'une part non négligeable de puissance ou nécessite d'utiliser un moteur électrique d'asservissement relativement important. On connaît également un deuxième type de variateur à poulies motrice et réceptrice de diamètre variable reliées par courroie.

Cependant, la puissance transmise par le variateur est limitée.

— la durée de vie de la courroie est insuffisante. Afin d'essayer de remédier aux inconvénients des variateurs de cette deuxième catégorie, on a créé un variateur dans lequel la courroie de transmission est remplacée par une chaîne.

Cependant, une telle substitution de l'organe de liaison entre les poulies motrice et réceptrice par un organe plus résistant à l'usure, n'a pas permis de supprimer les autres inconvénients des variateurs à poulie connus, à savoir: une puissance transmise trop faible pour un encombrement trop important.

Afin d'augmenter la puissance transmise, on a déjà proposé un variateur comportant deux chaînes de liaison disposées côte à côte entre la poulie motrice et la poulie réceptrice, un disque calé sur l'arbre de la poulie motrice et un disque calé sur l'arbre de la poulie réceptrice étant interposés entre lesdites chaînes.

Grâce à un tel agencement le nombre des zones contact entre les deux chaînes, les flasques des poulies et le disque est deux fois supérieur au nombre de zones de contact entre la chaîne unique et les flasques des poulies d'un variateur classique, ce qui permet d'augmenter de façon correspondante, la puissance transmise. Cependant, ces variateurs présentent eux aussi des inconvénients.

L'importance de la force à appliquer aux flasques des poulies pour assurer la transmission du couple nécessite de prévoir un système de rampes auquel est associé un ensemble d'actionnement hydraulique.

Un tel agencement rend le variateur d'un prix de revient élevé.

Les deux chaînes indépendantes travaillant en parallèle subissent des allongements inégaux au cours de temps ce qui entraîne, avec l'usure, un patinage d'une chaîne par rapport à l'autre.

Enfin, lorsqu'il s'agit de transmettre des puissances élevées, l'encombrement d'un variateur du type précité est encore beaucoup trop important pour qu'on puisse envisager son emploi sur un véhicule automobile.

L'invention vise à remédier aux inconvénients précités en créant un variateur qui permette d'assurer la transmission d'une puissance élevée tout en étant d'une construction relativement simple et d'un encombrement réduit.

Elle a donc pour objet un mécanisme de transmission à rapport variable de façon continue, comprenant au moins un arbre menant et au moins un arbre mené, une première poulie, calée en rotation sur l'arbre menant et comportant un flasque fixe en translation et un flasque déplaçable en translation par rapport au flasque fixe, une seconde poulie calée en rotation sur l'arbre mené et comportant un flasque fixe en translation et un flasque déplaçable en translation par rapport au flasque fixe, des moyens de commande du déplacement du flasque mobile en translation de la première poulie et un organe de transmission passant sur les première et seconde poulies, caractérisé en ce que sur les arbres menant et mené, entre les flasques des première et seconde poulies sont calés en rotation des éléments radiaux destinés à être engagés dans des rainures correspondantes ménagées dans l'organe de transmission, lesdites rainures étant délimitées par des parties dudit organe de transmission présentant une élasticité transversale permettant d'assurer le serrage desdits éléments radiaux lors de l'application d'une force de rapprochement entre les flasques desdites première et seconde poulies.

Suivant un caractéristique particulière de l'invention, ledit organe de transmission étant une chaîne, chaque maillon de celle-ci comporte des encoches parallèles à la direction de déplacement de la chaîne et délimitées par des lamelles élastiques qui constituent lesdites parties de l'organe de transmission présentant une élasticité transversale.

D'autres caractéristiques de l'invention apparaîtront au cours de la description qui va suivre.

Aux dessins annexés, donnés uniquement à titre d'exemple:

— la Fig. 1 est une vue en élévation et en coupe d'un mécanisme de transmission à rapport variable suivant l'invention comportant deux variateurs couplés ensemble;

— la Fig. 2 est une vue en coupe, à plus grande échelle de la poulie motrice de l'un des variateurs de la Fig. 1;

— la Fig. 3 est une vue de côté d'un maillon de la chaîne du variateur suivant l'invention;

— la Fig. 4 est une vue en perspective d'un maillon tel que celui de la Fig. 3, réalisé en une seule pièce;

— la Fig. 5 est une vue en perspective d'un maillon de chaîne pour variateur suivant l'invention, formé de plusieurs pièces assemblées;

— la Fig. 6 est une vue en perspective d'un élément d'une courroie destiné au variateur suivant l'invention;

— la Fig. 7 est une vue en perspective d'une variante de l'élément de la Fig. 6;

— la Fig. 8 est une vue de face en coupe d'un autre mode de réalisation d'un variateur suivant l'invention;

— la Fig. 9 est une coupe suivant la ligne 9—9 de la Fig. 8;

— la Fig. 10 est une vue schématique d'un variateur suivant l'invention dont l'élément de transmission est constitué par une couronne;

—la Fig. 11 est une coupe suivant la ligne 11—11 de la Fig. 10.

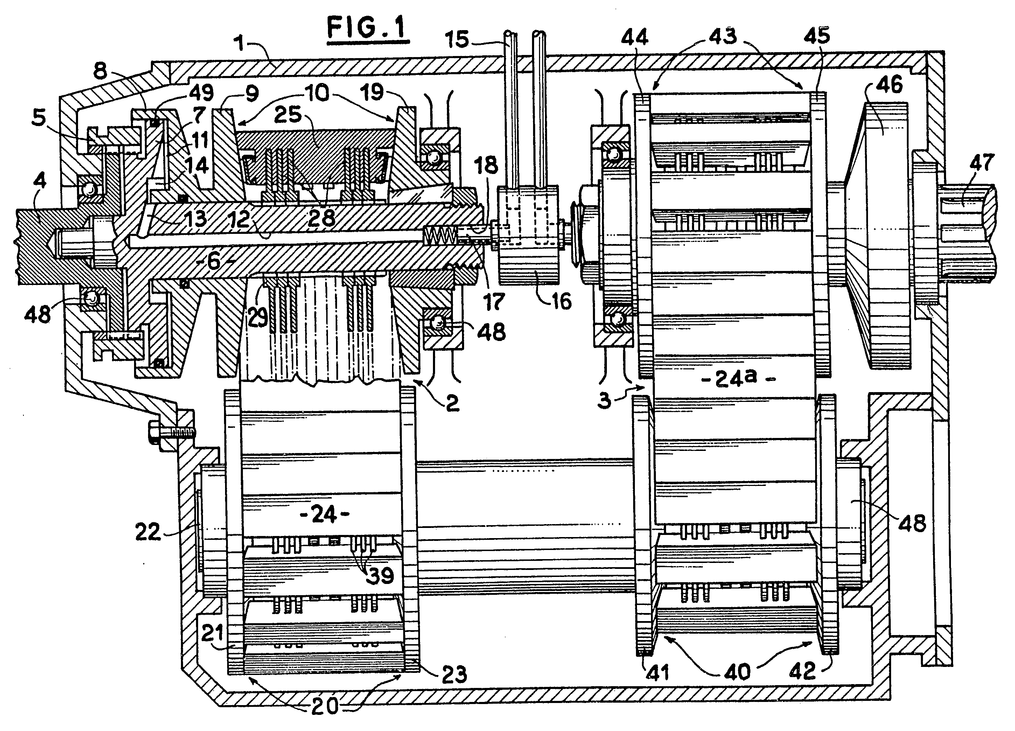

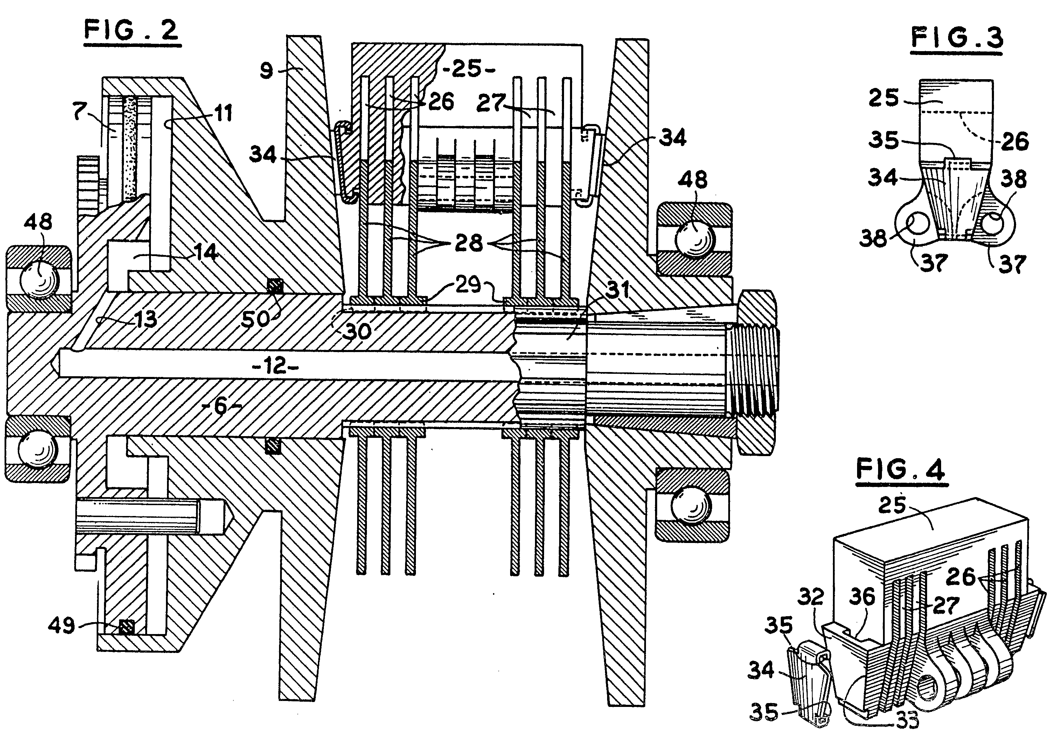

On va tout d'abord se référer aux Fig. 1 et 2 pour décrire un mécanisme de transmission perfectionné suivant l'invention.

On voit sur la Fig. 1 un tel mécanisme de transmission logé dans un carter 1 et comprenant deux variateurs de vitesse 2 et 3.

Le mécanisme de transmission comporte un arbre menant 4 et un arbre mené 47. L'arbre menant 4 est relié par l'intermédiaire d'un dispositif d'accouplement 5 classique à l'arbre d'entrée 6 du premier variateur 2. L'arbre d'entrée 6 comporte à son extrémité couplée à l'arbre menant 4, un piston 7 qui fait partie d'un vérin hydraulique 8 de commande du déplacement d'un flasque 9 d'une première poulie du variateur 2, monté déplaçable axialement sur l'arbre d'entrée 6.

Le vérin 8 comporte en outre un cylindre 11 venu de matière avec le flasque de poulie 9 et qui constitue donc la partie mobile du vérin.

Le vérin 8 est alimenté en fluide par un canal axial 12 ménagé dans l'arbre d'entrée 6.

Le canal 12 est connecté au vérin par un conduit 13 qui débouche dans une chambre 14 ménagée dans la surface du piston 7 située en regard du cylindre 11.

A son extrémité opposée, le canal 13 est relié à une tubulure d'alimentation 15 par l'intermédiaire d'un raccord 16 dont un embout 17 pénètre dans un orifice 18 par lequel se termine ledit canal.

A l'extrémité de l'arbre d'entrée 6 opposée au flasque 9 est claveté un flasque 19 fixe en translation.

Les flasques 9 et 19 de la première poulie 10 présentent d'une manière connue en soi, des surfaces intérieures tronconiques disposées en regard l'une de l'autre et destinées à coopérer avec un organe de liaison qui va être décrit par la suite.

Le variateur 2 comporte en outre une seconde poulie 20 formée d'un flasque 21 fixe en translation, claveté sur l'arbre de sortie 22 du variateur et un flasque 23 monté déplaçable en translation sur ledit arbre de sortie. Comme les flasques 9 et 19, les flasques 21 et 23 présentent des surfaces intérieures tronconiques.

Dans l'exemple représenté à la Fig. 1, l'organe de liaison entre les poulies 10 et 20 du variateur 2 est constitué par une chaîne 24. Les maillons de la chaîne 24 dont plusieurs modes de réalisation sont représentés aux Fig. 2 à 5 coopèrent successivement avec les surfaces tronconiques des poulies 10 et 20.

Ainsi qu'on peut le voir notamment aux Fig. 1 et 2, chaque maillon 25 présente en couple la forme d'un peigne comportant des encoches 26 et des lamelles 27, des disques 28 calés en rotation sur l'arbre 6 étant engagés dans les encoches 26.

Dans l'exemple représenté aux Fig. 1 et 2, les disques 28 sont portés par des moyeux séparés 29 pourvus des rainures intérieures 30 engagées dans des cannelures 31 ménagées dans la surface extérieure de l'arbre 6.

L'épaisseur des lamelles des maillons 25 est suffisamment faible pour que celles-ci présentent une élasticité transversale leur permettant de serrer les disques 28 lorsqu'un effort axial est appliqué par le vérin 8 au flasque 9 de la poulie 10. Elles peuvent être détalonnées.

Les maillons 25 présentent des éléments de contact avec les surfaces tronconiques des flasques 9 et 19, qui sont constitués ainsi qu'on peut mieux le voir à la Fig. 4 par une saillie 32 venue de matière avec chaque lamelle extérieure 27 du maillon.

Cette saillie présente une surface inclinée 33 dont l'inclinaison correspond à la pente des surfaces tronconiques des flasques. Sur cette surface est monté un organe élastique incurvé 34 bombé vers la surface de flasque correspondant et destiné à assurer que le serrage des disques 28 par les lamelles 27 des maillons 25 n'ait lieu que lorsque le maillon atteint une position radiale déterminée par rapport aux surfaces tronconiques des flasques. Les disques 28 peuvent être légèrement biconvexes.

Les organes élastiques 34 présentent des crochets 35 engagés dans des évidements 36 ménagés dans les saillies 32.

Ainsi qu'on peut le voir aux Fig. 3 et 4, les maillons 25 comportent des pattes 37 percées d'orifices 38 et dans lesquels sont destinés à être engagés des axes d'articulation et de liaison des maillons entre eux.

La poulie 20 du variateur comporte, comme la poulie 10, des disques 39 calés sur l'arbre de sortie 22 et coopérant avec la chaîne 24.

Le variateur 3 du mécanisme de transmission représenté à la Fig. 1 est indentique au variateur 2, à l'exception du fait que les positions des flasques de poulie fixes et mobiles en translation sont inversées.

C'est ainsi que la poulie d'entrée 40 du variateur 3 comporte un flasque 41 mobile axialement et solidaire en translation du flasque 23 de la poulie 20 du variateur 2.

En revanche, le flasque 42 de la poulie 40 est fixe en translation.

De même, la poulie de sortie 43 du variateur 3 comporte un flasque 44 fixe en translation et un flasque 45 déplaçable en translation, les déplacements de ce dernier étant commandés par un vérin 46 analogue au vérin 8 de commande du flasque 9 du variateur 2.

Les poulies 40 et 43 sont reliées par une chaîne 24a identiques à la chaîne 24 du variateur 2.

L'arbre de sortie du variateur 3 est couplé à l'arbre mene 47 du mécanisme de transmission.

Bien entendu, les arbres des poulies 10, 20, 30, 43 sont montés dans le carter 1 par l'intermédiaire de roulements appropriés 48 ou de tous autres organes de portée convenables. L'étanchéité du piston 7 du vérin 8 est assurée par un joint torique 49 monté dans une gorge ménagée dans la surface extérieure du piston 7.

Un joint torique 50 est également interposé entre le flasque 9 et l'arbre 6.

Dans le mode de réalisation représenté aux Fig. 1 à 4, les maillons des chaînes 24 et 24a de liaison entre les poulies des variateurs 2 et 3 sont réalisés en une seule pièce, seuls étant rapportés les organes élastiques 34.

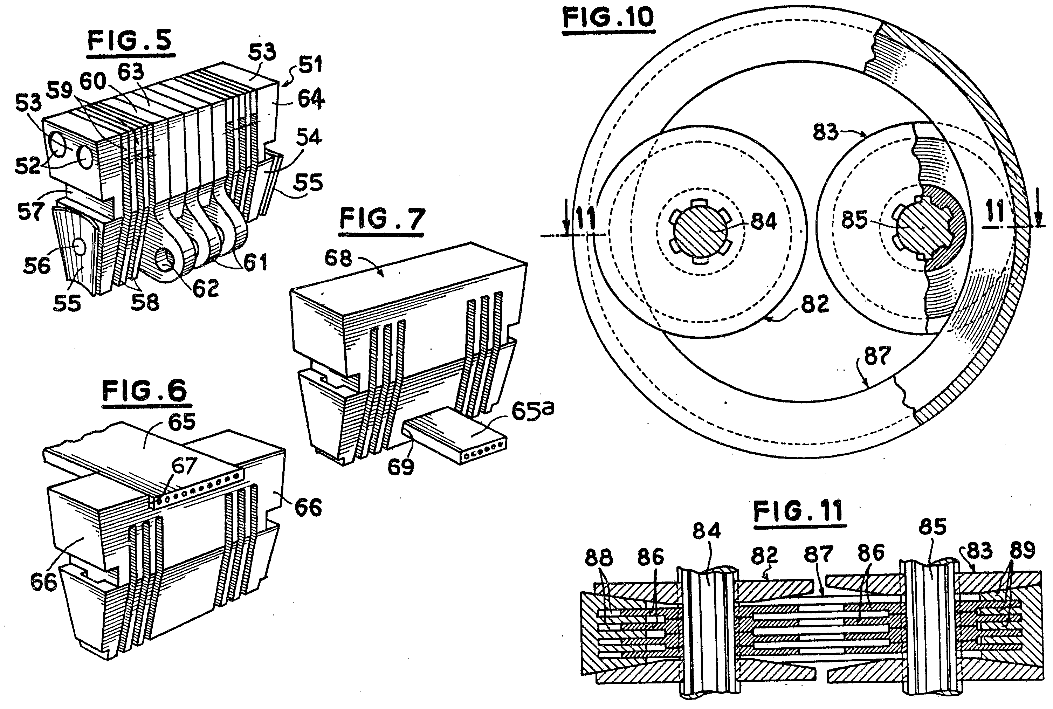

Le maillon 51 représenté à la Fig. 5 diffère des maillons précités en ce qu'il est constitué par un empilage d'éléments en forme de plaquettes assemblés par des tiges 52. Parmi ces plaquettes, on trouve deux plaquettes d'extrémité 53 pourvues chacune d'une saillie 54 sur laquelle est monté un organe élastique 55 incurvé, de concavité dirigée vers l'extérieur, maintenu avec jeu par rapport à ladite saillie par un rivet 56.

On voit que dans le présent exemple l'organe élastique 55 est d'une conception différente de celle de l'organe 34 du maillon 25 représenté à la Fig. 4.

Les plaquettes 53 présentent dans leur partie intermédiaire une rainure 57 qui leur donne une élasticité transversale suffisante pour assurer le serrage du disque 28 (Fig. 2) lors du rapprochement du flasque de la poulie correspondante.

Le maillon représenté à la Fig. 5 comporte en outre des lames élastiques 58 entre lesquelles sont intercalées des cales 59 de formation d'encoches.

Enfin, dans sa partie intermédiaire, le maillon 51 comprend des plaquettes 60 pourvues de pattes 61 percées de trous 62 destinés à recevoir les axes d'articulation des maillons et des plaquettes 63 formant cales, interposées entre les plaquettes 60.

Dans le mode de réalisation de la Fig. 5, le maillon comporte des talons 64 dont l'inclinaison correspond à la conicité des surfaces tronconiques des flasques avec lesquels coopère la chaîne.

Ces talons 64 sont destinés à établir, pour une position radiale donnée de la chaîne par rapport à la poulie, un rapport de transmission exact et reproductible.

Cependant, dans des applications où ce rapport peut subir de petites variations, les talons peuvent être supprimés.

Un exemple de chaîne à maillons sans talons est représenté à la Fig. 2.

L'absence des talons permet, par une variation de la position des flasques mobiles en translation, de faire varier le rapport de transmission de manière extrêmement rapide, ce qui n'est pas le cas pour les variateurs de vitesse classiques.

A la Fig. 6, on a représenté un élément analogue à celui de la Fig. 4 mais fixé à une courroie armée 65.

Par ailleurs, comme le maillon de la Fig. 5, cet élément est pourvu de talons 66.

Il comporte à sa partie supérieure un logement 67 dans lequel est engagée la courroie 65.

A la Fig. 7, on a représenté une variante de l'organe de liaison de la Fig. 6.

La différence entre les deux modes de réalisation réside dans le fait qu'à la Fig. 7 la courroie 65a de liaison entre les maillons 68 traverse la partie inférieure du maillon par une fente 69 ménagée dans celui-ci.

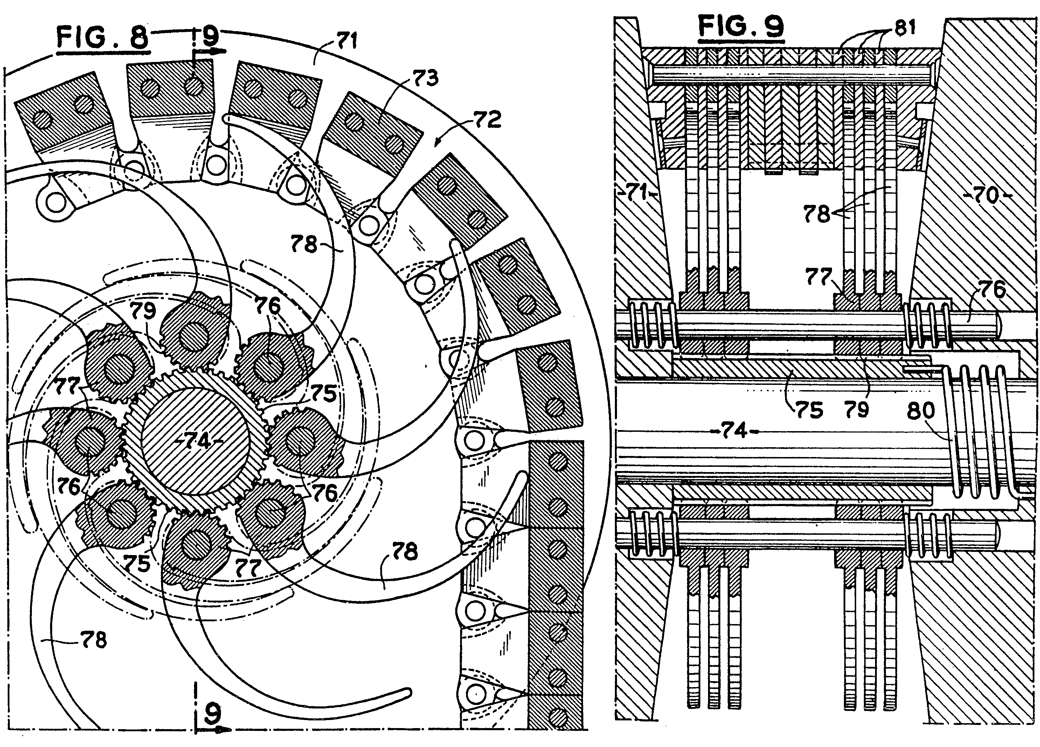

Aux Fig. 8 et 9, on a représenté en vue partielle un mode de réalisation particulier de variateur suivant l'invention.

Dans ce mode de réalisation, comme dans les exemples précédents, chaque poulie d'un variateur comporte un flasque 70 fixe axialement et un flasque 71 déplaçable en translation, un organe de liaison 72, ici constitué par une chaîne à maillons 73 analogue, à celui de la Fig. 5 reliant les poulies de variateur.

Sur chaque arbre de poulie tel que l'arbre 74, est montée une douille 75 à denture extérieure, tandis que sur des axes 76 parallèles à l'arbre 74 sont montées à rotation des pièces 77 en forme de peignes à dents recourbées 78, lesdites pièces 77 comportant chacune un secteur denté 79 engrenant avec la denture de la douille 75.

Par conséquent, les dents 78 des pièces 77 jouent ici le rôle des disques 28 du dispositif de la Fig. 2.

Ainsi qu'on peut le voir à la Fig. 9, un ressort de rappel 80, dont une extrémité est solidaire de la douille 75 et dont l'autre extrémité est reliée au flasque fixe 70 de la poulie, agit en permanence pour maintenir les pièces 77 en position déployée, à l'encontre de l'action de la chaîne 72.

Le profil des dents recourbées 78 est tel que, quelle que soit la position de la chaîne 72 par rapport aux poulies, les zones de contact entre les dents 78 des pièces 77 et les lames élastiques 81 des maillons 73 présentent des surfaces à peu près constantes.

La position repliée des pièces 77 représentée en trait mixte sur la Fig. 8, est atteinte lors de l'écartement maximal des flasques 70 et 71.

Le variateur représenté aux Fig. 10 et 11 est du type à organe de liaison rigide.

Il comporte, comme les variateurs précédemment décrits, deux poulies 82 et 83 à flasques déplaçables en translation deux à deux et présentant des surfaces intérieures tronconiques. Sur les arbres 84, 85 des poulies 82, 83 sont calés en rotation des disques 86 qui coopèrent avec une couronne rigide 87 présentant des gorges annulaires 88 dans lesquelles pénètrent les disques 86.

Les gorges 88 sont délimitées par des éléments de couronne mince 89, élastiques en direction transversale, de sorte que l'effort de serrage des flasques d'une poulie provoque le blocage des disques 86 dans la couronne 87. Les disques 86 sont portés par l'arbre 84. Le serrage n'est assuré que sur une ligne radiale des flasques.

Les ressorts prévus dans les modes de réalisation à chaîne et à courroie sont donc inutiles.

Les divers modes de réalisation de variateurs qui viennent d'être décrits présentent sur les dispositifs connus un certain nombre d'avantages.

Le fait que plusieurs disques calés sur les arbres d'entrée et de sortie coopèrent avec plusieurs surfaces de contact de l'organe de transmission, multiplie d'autant la capacité de transmission du couple.

Par conséquent, pour un effort donné appliqué au flasque mobile en translation d'une poulie d'un variateur, le couple transmis par le variateur suivant l'invention est beaucoup plus important que celui que l'on pouvait transmettre avec des variateurs classiques.

Ceci permet d'éviter l'application d'efforts importants sur les flasques mobiles des variateurs et rend par conséquent inutile l'emploi de tout dispositif multiplicateur à rampes.

La possibilité de transmettre une puissance importante permet de réduire l'encombrement du variateur suivant l'invention.

Enfin, le variateur suivant l'invention permet d'obtenir des rapports de transmission reproductibles avec précision et il présente un temps de réponse qui peut être réduit à de très faibles valeurs.

Dans le mode de réalisation de la Fig. 1, le mécanisme de transmission comporte deux variateurs suivant l'invention couplés en série, mais il est bien entendu que ce variateur est également conçu pour être utilisé seul.

Quant au fonctionnement du variateur suivant l'invention, il est analogue à celui des variateurs classiques de ce type.

**Revendications**

1. Mécanisme de transmission à rapport variable de façon continue, comprenant au moins un arbre menant et au moins un arbre mené, une première poulie calée en rotation sur l'arbre menant et comportant un flasque fixe en translation et un flasque déplaçable en translation par rapport au flasque fixe, une seconde poulie calée en rotation sur l'arbre mené et comportant un flasque fixe en translation et un flasque déplaçable en translation par rapport au flasque fixe, des moyens de commande du déplacement du flasque mobile en translation de la première poulie et un organe de transmission passant sur les première et seconde poulies, caractérisé en ce que sur les arbres menant et mené (6; 22), entre les flasques (9, 19; 21, 23) des première et seconde poulies (10; 20) sont calés en rotation des éléments radiaux (28, 39) destinés à être engagés dans des rainures correspondantes (26) ménagées dans l'organe de transmission (24), lesdites rainures (26) étant délimitées par des parties (27) dudit organe de transmission présentant une élasticité transversale permettant d'assurer le serrage desdits éléments radiaux (28) lors de l'application d'une force de rapprochement entre les flasques desdites première et seconde poulies.

2. Mécanisme suivant la revendication 1, caractérisé en ce que ledit organe de transmission étant une chaîne, chaque maillon (25; 51) de celle-ci comporte des encoches (26) parallèles à la direction de déplacement de la chaîne et délimitées par des lamelles élastiques (27; 53, 58) qui constituent lesdites parties de l'organe de transmission présentant une élasticité transversale.

3. Mécanisme suivant la revendication 2, caractérisé en ce que chaque maillon de chaîne (25) est réalisé en une seule pièce.

4. Mécanisme suivant la revendication 2, caractérisé en ce que chaque maillon de chaîne (51) est réalisé par un empilage de plaquettes (53, 58, 59, 60, 63) assemblées par des tiges transversales (52).

5. Mécanisme suivant la revendication 4, caractérisé en ce que ledit empilage constituant ledit maillon (51) comprend des plaquettes d'extrémité (52) enserrant les lames élastiques (58) entre lesquelles sont disposées des cales (59) de formation desdites encoches, ainsi que des plaquettes (60) pourvues de pattes (61) percées de trous (62) destinés à recevoir des axes d'articulation du maillon, des plaquettes (63) formant cales étant interposées entre lesdites plaquettes (60) pourvues de pattes (61).

6. Mécanisme suivant la revendication 1, caractérisé en ce que ledit organe de transmission est constitué par un ensemble d'éléments présentant des encoches délimitées par des parties présentant une élasticité transversale, lesdits éléments étant portés par une courroie (65; 67).

7. Mécanisme suivant la revendication 6, caractérisé en ce que lesdits éléments de l'organe de transmission sont fixés à leur courroie (65) par leur partie supérieure.

8. Mécanisme suivant la revendication 6, caractérisé en ce que lesdits éléments (68) de l'organe de transmission sont fixés à leur courroie (67) par leur partie inférieure, ladite courroie (67) traversant une fente (69) ménagée dans chacun desdits éléments (68).

9. Mécanisme suivant l'une quelconque des revendications 2 à 8, caractérisé en ce que chaque maillon (25; 51) de chaîne ou chaque élément (68) de courroie présente à ses extrémités destinées à coopérer avec les flasques des poulies, des éléments de contact avec les surfaces tronconiques des flasques de poulies, chaque élément de contact étant constitué par une saillie (32) solidaire de chacune des lamelles extérieures du maillon ou de l'élément de courroie considéré, ladite saillie (32) portant un organe élastique (34) incurvé, destiné à ne permettre le serrage des éléments radiaux (28) par lesdites lamelles élastiques des maillons ou des éléments de courroie que lorsque ces derniers atteignent une position radiale par rapport aux surfaces tronconiques des flasques des poulies.

10. Mécanisme suivant la revendication 9, caractérisé en ce que ledit organe élastique (34) est bombé vers l'extérieur et comporte des crochets (35) engagés par enclenchement dans des évidements (36) ménagés dans la saillie (32).

11. Mécanisme suivant la revendication 9, caractérisé en ce que ledit organe élastique (55) présente une concavité dirigée vers l'extérieur et est fixé à ladite saille par un rivet (56).

12. Mécanisme suivant l'une quelconque des revendications 2 à 11, caractérisé en ce que chaque maillon de chaîne ou chaque élément de courroie comporte au moins un talon (64, 66) disposé au dessus d'un élément de contact.

13. Mécanisme suivant l'une quelconque des revendications 1 à 12, caractérisé en ce que lesdits éléments radiaux sont constitués par des disques (28), plans ou biconvexes.

14. Mécanisme suivant la revendication 13, caractérisé en ce que les disques (86) sont portés par un moyeu commun calé en rotation sur l'arbre (84, 85) correspondant.

15. Mécanisme suivant l'une quelconque des revendications 1 à 11, caractérisé en ce que lesdits éléments radiaux sont constitués par des pièces (77) en forme de peignes à dents recourbées (78) montées à rotation sur des axes (76) parallèles à l'arbre (74) de la poulie considérée et régulièrement répartis autour dudit arbre et en ce qu'il comporte en outre des moyens (75, 79, 80) de déploiement desdites pièces en forme de peigne.

16. Mécanisme suivant la revendication 15, caractérisé en ce que lesdits moyens de déploiement comprennent une douille (75) à denture extérieure montée à rotation sur l'arbre (74) de la poulie considérée et engrenant avec des secteurs dentés (79) prévus sur chaque pièce (77) en forme de peigne, un ressort de rappel (80) étant prévu pour solliciter la douille (74) dans le sens du déploiement desdites pièces (77) en forme de peigne.

17. Mécanisme suivant la revendication 1, caractérisé en ce que ledit organe de transmission est constitué par une couronne rigide (87) présentant des gorges annulaires (88) dans lesquelles pénètrent lesdits éléments radiaux (86).

## Patentansprüche

1. Getriebe mit stufenlos veränderbarem Übersetzungsverhältnis, mit wenigstens einer antreibenden Welle und wenigstens einer angetriebenen Welle, einer mit der antreibenden Welle drehfest verkeilten ersten Rolle, die einen unverschiebbaren Flansch und einen bezüglich des unverschiebbaren Flansches verschiebbaren Flansch aufweist, einer mit der angetriebenen Welle drehfest verkeilten zweiten Rolle, die einen unverschiebbaren Flansch und einen bezüglich des unverschiebbaren Flansches verschiebbaren Flansch aufweist, einer Einrichtung zur Steuerung der Verschiebung des verschiebbaren Flansches der ersten Rolle, und einem über die erste und die zweite Rolle verlaufenden Kraftübertragungselement, *dadurch gekennzeichnet,* daß auf der antreibenden Welle (6) und der der angetriebenen Welle (22) zwischen den beiden Flanschen (9, 19; 21, 23) der ersten Rolle (10) und der zweiten Rolle (20) Radialelemente für ein Eingreifen in entsprechende in dem Übertragungselement (24) vorgesehene Ausnehmungen (26) verkeilt sind, wobei die Ausnehmungen durch Abschnitte (27) des Kraftübertragungselements begrenzt werden, welche eine Querelastizität aufweisen, die eine Klemmung der Radialelemente (28) gestattet, wenn zwischen den Flanschen der beiden Wellen eine im Sinne einer Annäherung der Flansche wirkende Kraft ausgeübt wird.

2. Getriebe nach Anspruch 1, *dadurch gekennzeichnet,* daß das Kraftübertragungselement eine Kette ist, daß jedes Kettenglied (25; 51) derselben zur Versetzungsrichtung der Kette parallele Schlitze (26) aufweist, die durch elastische Lamellen (27; 53, 58) begrenzt werden, welche die eine Querelastizität aufweisenden Abschnitte des Kraftübertragungselements bilden.

3. Getriebe nach Anspruch 2, *dadurch gekennzeichnet,* daß jedes Kettenglied (25) einstückig ausgebildet ist.

4. Getriebe nach Anspruch 2, *dadurch gekennzeichnet,* daß jedes Kettenglied (51) durch ein Paket von Platten (53, 58, 59, 60, 63), das durch ein quer verlaufendes Gestänge verbunden ist, gebildet ist.

5. Getriebe nach Anspruch 4, *dadurch gekennzeichnet,* daß das das Kettenglied (51) bildende Plattenpaket Endplatten, welche elastische Streifen (58), zwischen denen Schlitze ausbildende Zwischenblöcke (59) angeordnet sind, einschließen, sowie Platten (60), die mit Löchern (62) zur Aufnahme der Gelenkachse des Kettenglieds versehene Laschen (61) aufweisen, und Platten (63) die Zwischenblöcke zwischen den mit den Laschen (61) versehenen Platten (60) bilden, umfaßt.

6. Getriebe nach Anspruch 1, *dadurch gekennzeichnet,* daß das Kraftübertragungselement durch Teile gebildet ist, welche durch eine Querelastizität aufweisende Abschnitte begrenzte Schlitze aufweisen und daß die Teile durch einen Riemen (65; 67) getragen werden.

7. Getriebe nach Anspruch 6, *dadurch gekennzeichnet,* daß die Teile des Kraftübertragungselements mit ihrem oberen Abschnitt an ihrem Riemen (65) befestigt sind.

8. Getriebe nach Anspruch 6, *dadurch gekennzeichnet,* daß die Teile (68) des Kraftübertragungselements mit ihrem unteren Abschnitt an ihrem Riemen (67) befestigt sind und daß sich der Riemen (67) durch einen Schlitz (69) erstreckt, der in jedem der Teile (68) vorgesehen ist.

9. Getriebe nach einem der Ansprüche 2 bis 8, *dadurch gekennzeichnet,* daß jedes Kettenglied (25; 51) bzw. jedes Teil (68) des Riemens an seinen mit den Flanschen der Rollen zusammenwirkenden Enden Elemente zur Berührung mit den kegelstumpfförmigen Flächen der Flansche der Rollen aufweist, wobei jedes Berührelement durch einen mit der entsprechenden Außenlamelle des berachteten Kettenglieds oder des betrachteten Riemenelements einstückigen Vorsprung (32) gebildet ist und der Vorsprung (32) ein gekrümmtes elastisches Teil (34) trägt, das eine Klemmung der Radialelemente (28) durch die elastischen Lamellen der Kettenglieder oder der Teile des Riemens erst gestattet, wenn diese eine bestimmte Radialstellung bezüglich der kegelstumpfförmigen Flächen der Flansche der Rollen erreichen.

10. Getriebe nach Anspruch 9. *dadurch gekennzeichnet,* daß das elastische Teil (34) nach außen ballig ausgebildet ist und durch Einhängen in im Vorsprung (32) vorgesehene Aussparungen (36) festgemachte Haken (35) aufweist.

11. Getriebe nach Anspruch 9, *dadurch gekennzeichnet,* daß das elastische Teil (55) eine nach außengerichtete Konkavität aufweist und an dem Vorsprung mittels eines Niets (56) befestigt ist.

12. Getriebe nach einem der Ansprüche 2 bis 11, *dadurch gekennzeichnet,* daß jedes Kettenglied oder jedes Teil des Riemens wenigstens einen Absatz (64, 66) aufweist, der über dem Berührelement angeordnet ist.

13. Getriebe nach einem der Ansprüche 1 bis 12, *dadurch gekennzeichnet,* daß die Radialelemente durch Scheiben (28), die plan oder bikonvex sind, gebildet sind.

14. Getriebe nach Anspruch 13, *dadurch gekennzeichnet,* daß die Scheiben (86) auf einer gemeinsamen Nabe sitzen, die auf der zugehörigen Welle (84, 85) drehfest verkeilt ist.

15. Geitriebe nach einem der Ansprüche 1 bis 11, *dadurch gekennzeichnet,* daß die Radialelemente durch Teile (77) in Form von Kämmen mit gekrümmten ähnen (78) gebildet sind, die auf zur Welle (74) der betrachteten Rolle parallelen Achsen (76) drehbar angebracht und gleichmäßig um die Welle verteilt sind, und daß sie außerdem eine Einrichtung (75, 79, 80) zur Ausbreitung der kammförmigen Teile aufweist.

16. Getriebe nach Anspruch 15, *dadurch gekennzeichnet,* daß die Einrichtung zur Ausbreitung eine mit einer Außenverzahnung versehene Büchse (75), die drehbar auf der Welle (74) der betrachteten Rolle angebracht ist und mit auf jedem kammförmigen Teil (77) vorgesehenen Zahnsektoren (79) kämmt, und eine Rückstellfeder (80), die die Büchse (74) im Sinne einer Ausbreitung der kammförmigen Teile (77) belastet, umfaßt.

17. Getriebe nach Anspruch 1, *dadurch gekennzeichnet,* daß das Kraftübertragungselement durch einen starren Kreisring (87) gebildet ist, der ringförmige Nuten (88) aufweist, in welche die Radialelemente (86) eindringen.

**Claims**

1. A transmission mechanism having a continuously variable transmission ratio, comprising at least one driving shaft and at least one driven shaft, a first pulley mounted on the driving shaft to rotate with the driving shaft and having a cheek which is fixed in translation and a cheek which is movable in translation relative to the fixed cheek, a second pulley mounted on the driven shaft to rotate with the driven shaft and having a cheek fixed in translation and a cheek movable in translation relative to the fixed cheek, means for controlling the displacement of the cheek movable in translation of the first pulley and transmission means extending around the first pulley and the second pulley, characterized in that there are mounted on the driving and driven shafts (6; 22), between the cheeks (9, 19; 21, 23) of the first and second pulleys (10; 20) to rotate therewith radial elements (28, 39) adapted to be engaged in corresponding recesses (26) formed in the transmission means (24) said recesses (26) being defined by parts (27) of said transmission means having a transverse elasticity so as to permit the gripping of said radial elements (28) upon application of a force for moving the cheeks of said first and second pulleys toward each other.

2. A mechanism as claimed in claim 1, characterized in that said transmission means is a chain and each link (25; 51) of the latter comprises recesses parallel to the direction of displacement of the chain and defined by elastic plates (27; 53, 58) which constitute said parts of the transmission means having a transverse elasticity.

3. A mechanism as claimed in claim 2, characterized in that each chain link (25) is made in a single piece.

4. A mechanism as claimed in claim 2, characterized in that each chain link (51) is formed by a stack of plates (53, 58, 59, 60, 63) which are assembled by transverse pins (52).

5. A mechanism as claimed in claim 4, characterized in that said stack constituting said link (51) comprises end plates (52) between which are inserted the elastic plates (58) between which elastic plates are disposed shims (59) forming said recesses, and plates (60) provided with tabs (61) having apertures (62) for receiving articulation pins of the link, plates (63) forming shims being interposed between said plates (60) provided with tabs (61).

6. A mechanism as claimed in claim 1, characterized in that said transmission means comprise an assembly of elements having notches defined by parts having a transverse elasticity, said elements being carried by a belt (65; 67).

7. A mechanism as claimed in claim 6, characterized in that said elements of the transmission means are fixed to their belt (65) by their upper part.

8. A mechanism as claimed in claim 6, characterized in that said elements (68) of the transmission means are fixed to their belt (67) by their lower part, said belt (67) extending through a slot (69) formed in each of said elements (68).

9. A mechanism as claimed in any one of the claims 2 to 8, characterized in that each chain link (25; 51) or each belt element (68) has at the ends thereof adapted to cooperate with the cheeks of the pulleys contact elements for contact with the frustoconical surfaces of the pulley cheeks, each contact element being formed by a projection (32) rigid with each one of the outer plates of the considered link or the considered belt element, said projection (32) carrying a curved elastic member (34) which is adapted to permit the gripping of the radial elements (28) by said elastic plates of the links or belt elements only when the latter reach a radial position relative to the frustoconical surfaces of the cheeks of the pulleys.

10. A mechanism as claimed in claim 9, characterized in that said elastic member (34) is outwardly convex and curved and includes hooks (35) which are clipped in cavities (36) formed in the projection (32).

11. A mechanism as claimed in claim 9, characterized in that said elastic member (55) has an outward concavity and is fixed to said projection by a rivet (56).

12. A mechanism as claimed in any one of the claims 2 to 11, characterized in that each chain link or each belt element comprises at least one heel (64, 66) disposed above a contact element.

13. A mechanism as claimed in any one of the claims 1 to 12, characterized in that said radial elements are formed by planar or biconvex discs (28).

14. A mechanism as claimed in claim 13, characterized in that the discs (86) are carried by a common hub mounted on the corresponding shaft (84, 85) to rotate with the latter.

15. A mechanism as claimed in any one of the claims 1 to 11, characterized in that said radial elements are formed by members (77) in the shape of combs having curved teeth (78) rotatably mounted on pins (76) parallel to the shaft (74) of the considered pulley and equally spaced apart around said shaft, and the mechanism further comprises means (74, 79, 80) for deploying said comb-shaped members.

16. A mechanism as claimed in claim 15, characterized in that said deploying means comprises a sleeve (75) having outer teeth and rotatably mounted on the shaft (74) of the considered pulley and in mesh with toothed sectors (79) provided on each comb-shaped member (77), a return spring (80) being provided for biasing the sleeve (74) in the direction for deploying said comb-shaped members (77).

17. A mechanism as claimed in claim 1, characterized in that said transmission means are formed by a rigid ring (87) having annular grooves (88) into which said radial elements (86) extend.

FIG.1

0003 198

## FIG.2

9

7

11

34

48

48

34

48

-25-

26    27

28

14

13    50    30    29    31

-12-

-6-

49

## FIG.3

25

35

34

38    38

37    37

26

38

## FIG.4

25

32    36

35

34

35

26

27

33

0003198

**FIG.5**

**FIG.7**

**FIG.6**

**FIG.10**

**FIG.11**

0 003 198

FIG. 8

FIG. 9